# EUROPEAN PATENT APPLICATION

(11) **EP 2 184 602 A1**
(43) Date of publication of application: **12.05.2010**
(21) Application number: 08827833.8
(22) Date of filing: 22.08.2008
(51) Int. Cl.: G01N 27/447, G01N 37/00

(54) **MICRO-CHANNEL CHIP FOR ELECTROPHORESIS AND METHOD FOR ELECTROPHORESIS**

(30) Priority: 22.08.2007 JP 2007215665
(71) Applicant: AIDA ENGINEERING, LTD., Sagamihara-shi, Kanagawa-ken (JP)
(72) Inventor: MISHINA, Yoshinori, Sagamihara-shi Kanagawa 229-1181 (JP); HAGIWARA, Hisashi, Sagamihara-shi Kanagawa 229-1181 (JP)
(74) Representative: Hackney, Nigel John
(86) International application number: PCT/JP2008/065024
(87) International publication number: WO 2009/025361

(57) **Abstract**

The micro-channel chip for electrophoresis of the present invention comprises a first substrate formed of a gas-permeable material and a second substrate formed of a gas-permeable or a gas-impermeable material, the first and the second substrate being glued together, the mating surface of either one of the first and second substrates having a sample-feeding channel having a port at both ends and an electrophoretic channel also having a port at both ends, the sample-feeding channel and the electrophoretic channel being allowed to communicate with each other via a narrower channel having a smaller cross-sectional area than those two channels. The micro-channel chip for electrophoresis of the present invention requires only one power source to perform electrophoresis and can use samples with minimum waste of their quantity.

## Description

### TECHNICAL FIELD

The present invention relates to a micro-channel chip. More particularly, the present invention relates to a micro-channel chip for electrophoresis and a method for electrophoresis that uses this micro-channel chip.

### BACKGROUND ART

To analyze extremely small amounts of samples such as proteins and nucleic acids (e.g., DNA), an electrophoretic apparatus has conventionally been used. A typical example of this apparatus is a slab gel electrophoretic apparatus. The electrophoretic procedure has conventionally involved analyzing a radioisotope-labeled sample but this method suffers the problem that it takes much labor and time. Further, from the viewpoint of radioactivity management, utmost safety and control are always required and analysis can only be performed within special facilities. Under the circumstances, an approach is being under review that involves labeling a sample with a phosphor.

In the light-based method, fluorescently labeled DNA fragments are allowed to migrate through a gel and they are assayed sequentially as they pass by an optical excitation section and a photodetector that are provided for each migration channel 15 to 20 cm below the electrophoresis start section. For example, various lengths of DNA with known terminal base species are replicated by the enzyme method (dideoxy method) using as a template the DNA strand whose sequence is to be determined, and the replicated DNA fragments are labeled with a phosphor. Briefly, fluorescently labeled groups of adenine (A) fragments, cytosine (C) fragments, guanine (G) fragments, and thymine (T) fragments are obtained. These fragment groups are mixed together and injected into separate migration lane grooves in an electrophoretic gel and an electric voltage is then applied. Since DNA is a chain-like high polymer molecule with negative electric charge, it moves through the gel at a speed in inverse proportion to its molecular weight. The shorter the DNA strand (the smaller its molecular weight), the faster it moves whereas the longer the DNA strand (the larger its molecular weight), the more slowly it moves; hence, DNA can be fractionated in terms of its molecular weight.

The official gazette of JP 63-21556 A (Patent Document 1) discloses a DNA base sequencing apparatus so adapted that a line on the gel in an electrophoretic apparatus to be irradiated with laser and the direction in which a plurality of photodiodes are provided in an array are perpendicular to the direction in which DNA fragments are migrated in the electrophoretic apparatus. In this DNA base sequencing apparatus, the space between a pair of glass plates is filled with a gel electrolyte such as polylacrylamide to form a gel electrophoretic layer and then a DNA sample is injected at an end of the gel electrophoretic layer and, with both ends of the gel electrophoretic layer being immersed in a buffer solution, an electric voltage is applied to both ends of it so as to cause electrophoresis of the DNA sample, whereby DNA fragments are developed on the gel electrolyte layer. In the light-based method, fluorescently labeled DNA fragments are allowed to migrate through a gel and they are assayed sequentially as they pass by an optical excitation section and a photodetector that are provided for each migration channel 15 to 20 cm below the electrophoresis start section. For example, various lengths of DNA with known terminal base species are replicated by the enzyme method (dideoxy method) using as a template the DNA strand whose sequence is to be determined, and the replicated DNA fragments are labeled with a phosphor. Briefly, fluorescently labeled groups of adenine (A) fragments, cytosine (C) fragments, guanine (G) fragments, and thymine (T) fragments are obtained. These fragment groups are mixed together and injected into separate migration lane groups in an electrophoretic gel and an electric voltage is then applied. Since DNA is a chain-like high polymer molecule with negative electric charge, it moves through the gel at a speed in inverse proportion to its molecular weight. The shorter the DNA strand (the smaller its molecular weight), the faster it moves whereas the longer the DNA strand (the larger its molecular weight), the more slowly it moves; hence, DNA can be fractionated in terms of its molecular weight.

The apparatus described above has the advantage that it can handle large amounts of samples at a time; on the other hand, heat generation due to Joule's heat in the gel has precluded the application of high electric voltage for analysis. As a result, the time required by analysis (migration) is so prolonged that it has been impossible to meet the demand for rapid analysis as is required by DNA diagnosis.

A substitute for this apparatus is proposed in the official gazette of JP 11-183437 A (Patent Document 2), which describes an ultra-small electrophoretic apparatus, called "a micro-channel chip", which comprises two joined substrates, one of which has formed in its mating surface a plurality of fine-width passages (channels) that serve as electrophoretic channels and a plurality of ports that communicate with those fine-width passages and which are open to the atmosphere.

The prior art micro-channel chip for electrophoresis described in the official gazette of JP 11-183437 A is shown in FIG. 8; it comprises a transparent substrate 100 such as glass or a synthetic resin (e.g., a polydimethylsiloxane or acrylic resin) that has an electrophoretic separating channel 102 and a sample-introducing channel 104 that crosses the electrophoretic separating channel 102 at right angles. This micro-channel chip, with the electrophoretic separating channel 102 and the sample-introducing channel 104 crossing each other, is also known as a chip of cross-injection type. Provided at opposite ends of the electrophoretic separating channel 102 are a migration medium port 106 to be grounded and a migration medium port 108 to be supplied with high voltage. Provided at opposite ends of the sample-introducing channel 104 are a sample port 110 to be grounded and a migration medium port 112 to be supplied with high voltage.

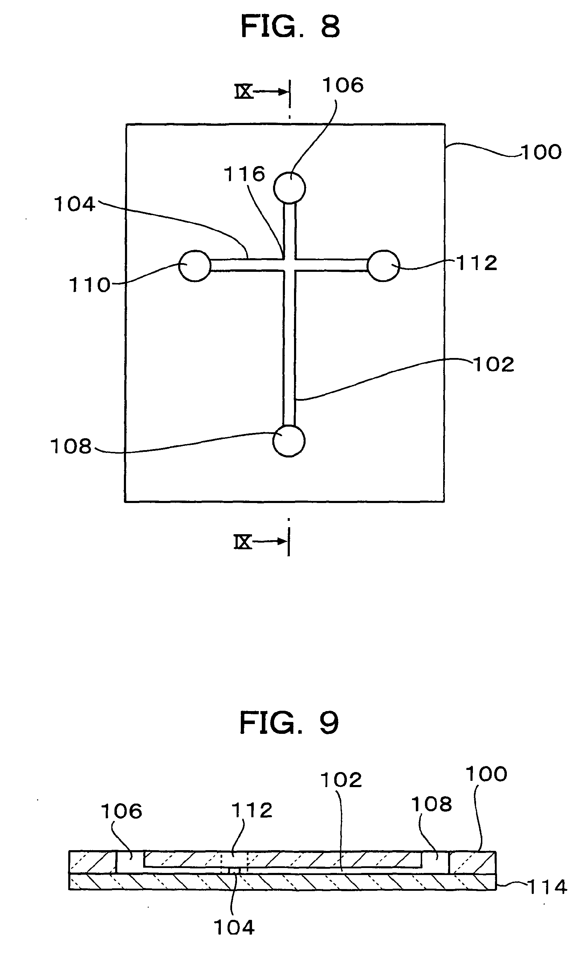

FIG. 9 is a section taken through FIG. 8 along line IX-IX. As illustrated, the migration medium ports 106 and 108 are so provided as to penetrate the transparent substrate 100, and the separating channel 102 that communicates with the migration medium ports 106 and 108 is provided on the underside of the substrate 100. A counter-substrate 114 made of a transparent or opaque material (e.g., glass or a synthetic resin film) is glued to the underside of the substrate 100. Because of this counter-substrate 114, a migration medium, a DNA sample and the like can be injected into the ports and grooves.

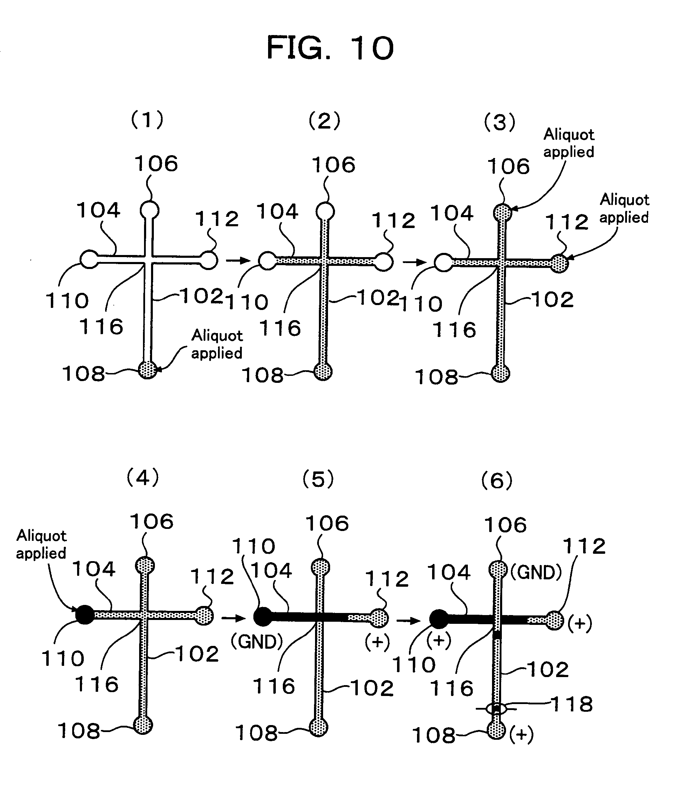

FIG. 10 is a schematic diagram showing how to use the micro-channel chip depicted in FIG. 8. First, in step (1), a migration medium (e.g., a gel electrolyte) that is to serve as an electrophoretic separating migration channel is aliquoted into that migration medium port 108 of the separating channel 102 which is to be supplied with high voltage. Then, in step (2), pressure is gently applied through this port 108 so that the separating channel 102 and the sample-introducing channel 104 are filled with the migration medium. Then, in step (3), the migration medium is aliquoted into the ports 106 and 112. Then, in step (4), the DNA sample (gene fragment) is aliquoted into the port 110. Then, in step (5), a voltage (say, 300 V) is applied to the sample-introducing channel 104, with the port 110 of the sample-introducing channel 104 being grounded and the port 112 supplied with high voltage, whereupon the DNA sample is migrated from the port 110 toward the port 112. After a fluorescence detector confirms that the DNA sample has reached the port 112 or after it has migrated for a predetermined period of time, the voltage application between the ports 110 and 112 is stopped. Then, in step (6), with a low voltage (say, 130 V) being applied between the ports 110 and 112, a high voltage (say, 750 V) is applied to the port 108 of the separating channel 102, with the port 106 being grounded and the port 108 supplied with high voltage, whereupon the DNA sample (gene fragments) present at the channel crossing 116 is migrated toward the port 108. In the process of electrophoresis with high voltage being applied to the port 108, a low voltage is kept applied between the ports 110 and 112 in order to ensure that no unwanted sample will flow toward the port 108 (this low voltage is commonly called a returning voltage). An optical measuring position 118 is located somewhere along the separating channel 102 and the separated fragment that has been migrated to this position is irradiated with excitation light from a light source (not shown), whereupon the fluorescence emitted from the phosphor with which the fragment has been labeled is received by a light receiving means (not shown) for analysis.

A problem with the chip of cross-injection type depicted in FIG. 8 is that in addition to a power source for introducing the sample into the channel crossing 116, a power source is also required to migrate the sample in separate fragments, and this renders the overall power system for the electrophoretic apparatus not only complicated but also bulky. What is more, since the sample must be sent from the port 110 to the port 112, the overall capacity of the sample-introducing channel 104 and the ports 110 and 112 is overwhelmingly larger than the capacity of the channel crossing in which the sample is actually used for electrophoresis and large amounts of samples are simply wasted (i.e., they are disposed of without being used). Since sample amplification is performed by the PCR technique which requires much labor and cost, it is extremely uneconomical if large numbers of samples that have been amplified by this labor-intensive and costly approach are simply disposed of without being used.
Patent Document 1: JP 63-21556 A
Patent Document 2: JP 11-183437 A

### DISCLOSURE OF THE INVENTION

### PROBLEMS TO BE SOLVED BY THE INVENTION

An object, therefore, of the present invention is to provide a micro-channel chip for electrophoresis that requires only one power source to perform electrophoresis and which can use samples with minimum waste of their quantity.

Another object of the present invention is to provide a method for electrophoresis that uses a micro-channel chip for electrophoresis that requires only one power source to perform electrophoresis and which can use samples with minimum waste of their quantity.

### MEANS FOR SOLVING THE PROBLEMS

The first invention as a means for solving the first problem described above is a micro-channel chip for electrophoresis comprising a first substrate formed of a gas-permeable material and a second substrate formed of a gas-permeable or a gas-impermeable material, the first and the second substrate being glued together, the mating surface of either one of the first and second substrates having a sample-feeding channel having a port at both ends and an electrophoretic channel also having a port at both ends, the sample-feeding channel and the electrophoretic channel being allowed to communicate with each other via a narrower channel having a smaller cross-sectional area than those two channels.

According to this invention, the sample-feeding channel and the electrophoretic channel are allowed to communicate with each other via the narrower channel, so when a sample solution and an electrophoretic separating polymer are brought into contact with each other to form an interface, the behaviors of the two liquids are restricted by the narrower channel and the interface once formed will not be disrupted. In addition, since the sample is moved from the sample solution of greater sample mobility and injected into the separating polymer of smaller mobility, the sample is compressed into the narrow range defined by the narrower channel, whereupon electrophoresis can be performed achieving effective separation of fragments. Furthermore, since the sample is injected from the sample-feeding channel into the electrophoretic channel via the narrower channel, there is no need to provide a power source for injecting the sample.

The second invention as a means for solving the first problem described above is a micro-channel chip for electrophoresis according to the first invention, **characterized in that** a projection is formed halfway down each of the sample-feeding channel and the electrophoretic channel and that the two projections are allowed to communicate with each other via the narrower channel.

According to this invention, there is obtained the advantage that if the electrophoretic channel and the sample-feeding channel are each formed in a generally T shape and if the projecting end of one T shape and that of the other T shape are allowed to communicate with each other via the narrower channel, the flows of solutions in the narrower channel will become less disrupted.

The third invention as a means for solving the first problem described above is a micro-channel chip for electrophoresis according to the first invention, **characterized in that** each of the sample-feeding channel and the electrophoretic channel comprises a channel of ordinary width having a channel portion of smaller width halfway down that channel and that the two channel portions of smaller width are allowed to communicate with each other via the narrower channel.

According to this invention, there is obtained the advantage that the flows of solutions in the narrower channel will become even less disrupted.

The fourth invention as a means for solving the first problem described above is a micro-channel chip for electrophoresis according to the third invention, **characterized in that** the area between the channel of ordinary width and the channel portion of smaller width is formed as a taper.

According to this invention, there is obtained the advantage that the flows of solutions in the narrower channel will become still less disrupted.

The fifth invention as a means for solving the first problem described above is a micro-channel chip for electrophoresis according to the third invention, **characterized in that** a channel of ordinary width is connected to the port at one end of the sample-feeding channel whereas the channel portion of smaller width is connected to the port at the other end of the sample-feeding channel.

According to this invention, the port at the other end of the sample-feeding channel is used to withdraw air, so there is no need to connect a channel of ordinary width to that port. This contributes to reducing the amount of the sample that need be used.

The sixth invention as a means for solving the first problem described above is a micro-channel chip for electrophoresis according to the first invention, characterized by having a plurality of electrophoretic channels, all of which are connected at an end to a single port and every two of which are connected at the other end to one common port, one sample-feeding channel being connected to each electrophoretic channel via the narrower channel, and one common air-withdrawing port being connected to every two sample-feeding channels.

According to this invention, there is obtained a micro-channel chip for electrophoresis that allows a plurality of samples to be analyzed efficiently.

The seventh invention as a means for solving the first problem described above is a micro-channel chip for electrophoresis according to the first invention, **characterized in that** the air-permeable material is silicone rubber.

According to this invention, the micro-channel chip for electrophoresis of the present invention can be easily fabricated by using silicone rubber which is also suitable for forming fine-width structures such as channels.

The eighth invention as a means for solving the first problem described above is a micro-channel chip for electrophoresis according to the seventh invention, **characterized in that** the silicone rubber is polydimethylsiloxane (PDMS).

According to this invention, the micro-channel chip for electrophoresis of the present invention can be easily fabricated by using gas-permeable polydimethylsiloxane (PDMS).

The ninth invention as a means for solving the second problem described above is a method for electrophoresis using a micro-channel chip for electrophoresis comprising a first substrate formed of a gas-permeable material and a second substrate formed of a gas-permeable or a gas-impermeable material, the first and the second substrate being glued together, the mating surface of either one of the first and second substrates having a sample-feeding channel having a port at both ends and an electrophoretic channel also having a port at both ends, the sample-feeding channel and the electrophoretic channel being allowed to communicate with each other via a narrower channel having a smaller cross-sectional area than those two channels, comprising:
(1) the step of aliquoting an electrolyte polymer solution for electrophoretic separation into the first port of the electrophoretic channel;
(2) the step of applying pressure through the first port so that the electrophoretic channel is entirely filled with the electrolyte polymer solution;
(3) the step of aliquoting the electrolyte polymer solution into the second port of the electrophoretic channel;
(4) the step of aliquoting a sample solution into the first port of the sample-feeding channel;
(5) the step of applying pressure from the first port so that the sample-feeding channel is entirely filled with the sample solution;
(6) the step of applying pressure simultaneously not only through the first and second ports of the electrophoretic channel but also through the first and second ports of the sample-feeding channel, whereby the air left within the narrower channel is removed via the gas-permeable substrate and the sample solution and the electrolyte sample solution are brought into contact with each other within the narrower channel to form an interface;
(7) the step of applying an electric voltage to the first port of the electrophoretic channel, with the second port of the electrophoretic channel being rendered open and the first port of the sample-feeding channel grounded (G), whereupon the sample solution in the narrower channel is moved to the electrophoretic channel; and
(8) the step of applying, at the point in time when the sample solution has moved to the electrophoretic channel, an electric voltage to the first port of the electrophoretic channel, with the first port of the sample-feeding channel being rendered open and the second port of the electrophoretic channel grounded (G), so that the sample is electrophoresed.

According to this invention, the use of the substrate made of a gas-permeable material enables air to be removed from within the narrower channel, whereby the sample solution and the electrolyte polymer solution are brought into contact with each other to form an interface within the narrower channel and yet the formed interface will not be disrupted. In addition, since the sample is moved from the sample solution of greater sample mobility and injected into the electrolyte separating polymer of smaller mobility, the sample is compressed into the narrow range, whereupon electrophoresis can be performed while achieving effective separation of fragments. Furthermore, since this method requires only one type of migration voltage, the power source configuration can be simplified.

The tenth invention as a means for solving the second problem described above is a method for electrophoresis according to the ninth invention, **characterized in that** the air-permeable material is silicone rubber.

According to this invention, the electrophoretic method of the present invention can be implemented effectively by using silicone rubber which is also suitable for forming fine-width structures such as channels.

The eleventh invention as a means for solving the second problem described above is a method for electrophoresis according to the tenth invention, **characterized in that** the silicone rubber is polydimethylsiloxane (PDMS).

According to this invention, the electrophoretic method of the present invention can be implemented most effectively by using gas-permeable polydimethylsiloxane (PDMS).

### EFFECTS OF THE INVENTION

The micro-channel chip for electrophoresis of the present invention has the following advantages over the conventional chip of cross-injection type depicted in FIG. 8.
(1) The conventional chip of cross-injection type requires a returning voltage to work, so both ends of a band that has formed will move only slowly. An adverse effect this phenomenon has on the resolution is suppressed in the micro-channel chip for electrophoresis of the present invention.
(2) In the conventional chip of cross-injection type, the shape of the sample plug is not symmetrical with the channel axis, so the sample distribution will become nonuniform to increase the chance that migration proceeds unevenly. In the micro-channel chip for electrophoresis of the present invention, the shape of the sample plug is symmetrical with the channel axis, so the sample distribution is comparatively uniform and there is little chance that migration proceeds unevenly.
(3) The conventional chip of cross-injection type requires a returning voltage to realize migration of separate fragments, so more than one power source and electric voltage must not only be provided but also be adjusted properly. In the micro-channel chip for electrophoresis of the present invention, an electric voltage is basically applied in only a uniaxial direction, so a single power source will suffice. As a consequence, the power source configuration is simplified.
(4) In the conventional chip of cross-injection type, air bubbles, once entrained during the filling of a channel with the separating electrolyte polymer for electrophoresis, cannot be removed. In the micro-channel chip for electrophoresis of the present invention, at least one of the two substrates is formed of a gas-permeable material, so air bubbles can be removed from any desirable site with the result that highly reproducible migration is easy to achieve.
(5) A temperature imbalance within the conventional chip of cross-injection type leads to a difference in electrical resistance, so the sample solution and the electrolyte polymer solution cannot be injected in reproducible amounts and, in addition, the balance with the returning voltage is easily upset. These problems are absent from the micro-channel chip for electrophoresis of the present invention since an electric voltage is basically applied in only a uniaxial direction.

### BRIEF DESCRIPTION OF THE DRAWINGS

FIG. 1 is a transparent plan view showing an embodiment of the micro-channel chip for electrophoresis of the present invention.
FIG. 2 shows an outline section taken through FIG. 1 along line II-II.
FIG. 3 is a transparent plan view showing another embodiment of the micro-channel chip for electrophoresis of the present invention.
FIG. 4A is a transparent plan view showing still another embodiment of the micro-channel chip for electrophoresis of the present invention.
FIG. 4B is a partially enlarged transparent plan view of the micro-channel chip for electrophoresis of the present invention shown in FIG. 4A.
FIG. 5A is a flow sheet illustrating the first three steps in the method for electrophoresis using the micro-channel chip for electrophoresis according to the embodiment shown in FIG. 4.
FIG. 5B is a flow sheet illustrating the subsequent three steps in the method for electrophoresis using the micro-channel chip for electrophoresis according to the embodiment shown in FIG. 4.
FIG. 5C is a flow sheet illustrating the last two steps in the method for electrophoresis using the micro-channel chip for electrophoresis according to the embodiment shown in FIG. 4.
FIG. 6A is a transparent plan view showing a further embodiment of the micro-channel chip for electrophoresis of the present invention.
FIG. 6B is a transparent plan view showing a still further embodiment of the micro-channel chip for electrophoresis of the present invention.
FIG. 6C is a transparent plan view showing yet another embodiment of the micro-channel chip for electrophoresis of the present invention.
FIG. 7A is a transparent plan view showing a further embodiment of the micro-channel chip for electrophoresis of the present invention.
FIG. 7B is a transparent plan view showing a still further embodiment of the micro-channel chip for electrophoresis of the present invention.
FIG. 7C is a transparent plan view showing yet another embodiment of the micro-channel chip for electrophoresis of the present invention.
FIG. 8 is an outline plan view showing an example of the conventional micro-channel chip.
FIG. 9 shows a section taken through FIG. 8 along line IX-IX.
FIG. 10 is a partial outline plan view showing the procedure of injecting a sample solution and an electrolyte polymer solution into an electrophoretic channel in the micro-channel chip for electrophoresis depicted in FIG. 8.

### BEST MODES FOR CARRYING OUT THE INVENTION

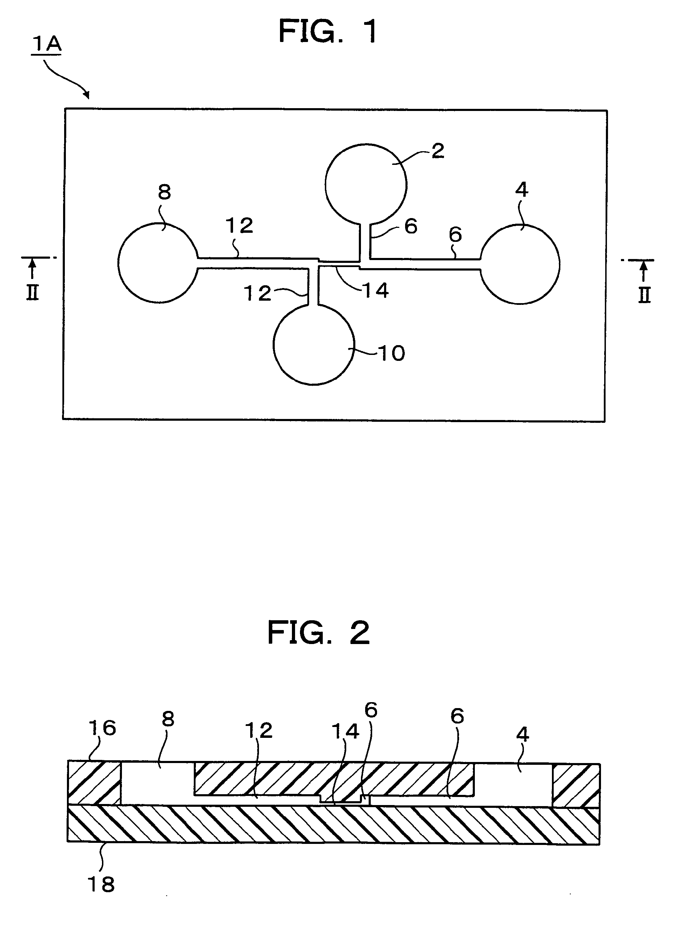

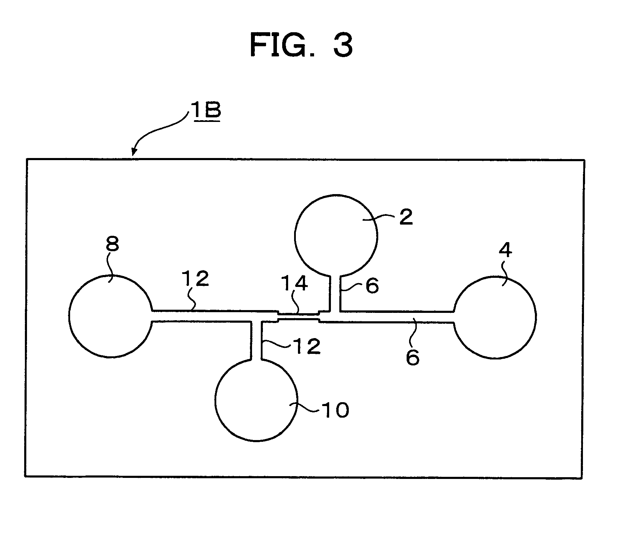

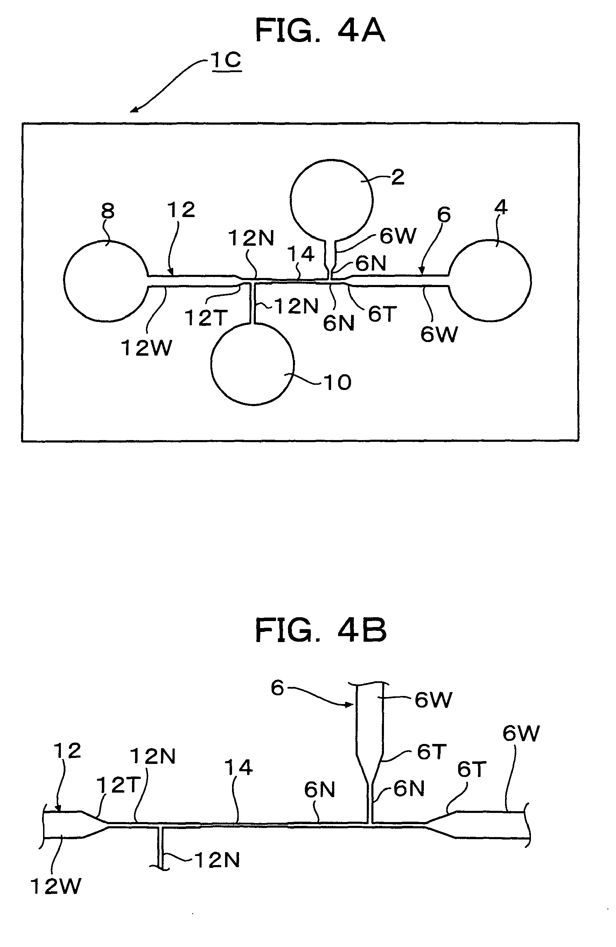

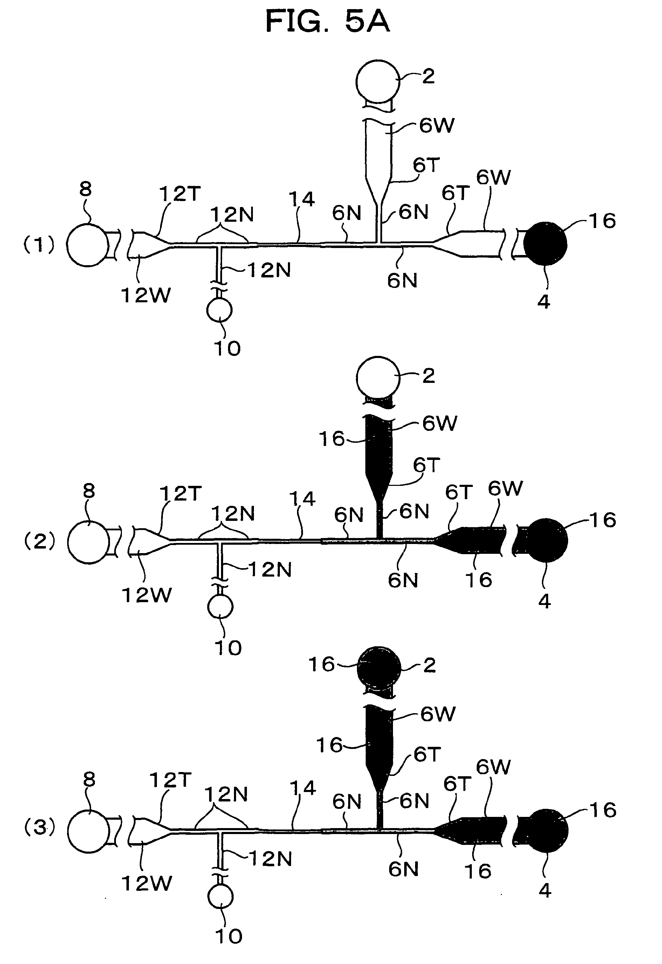

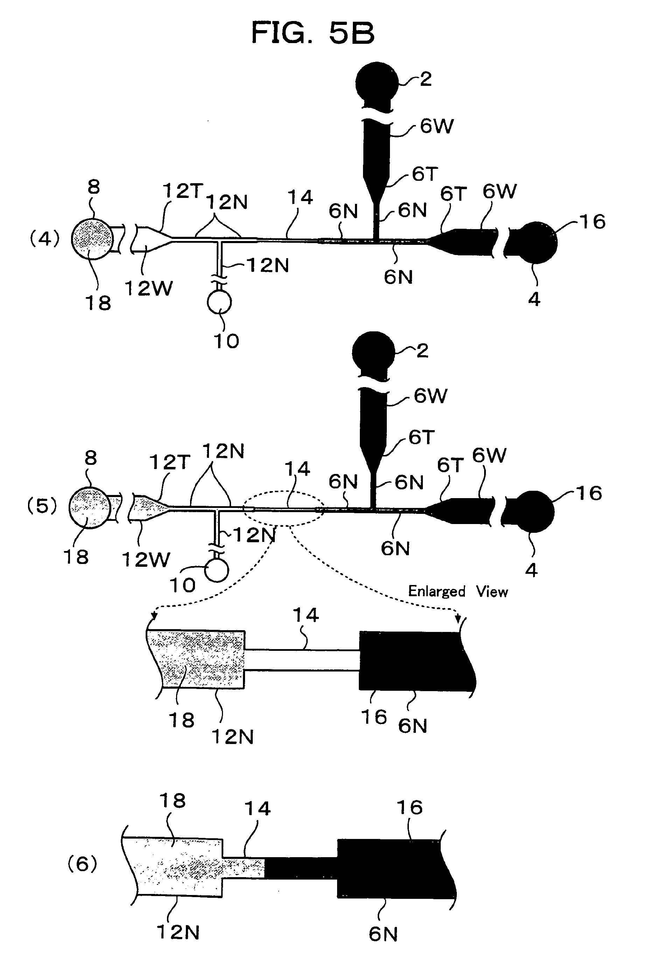

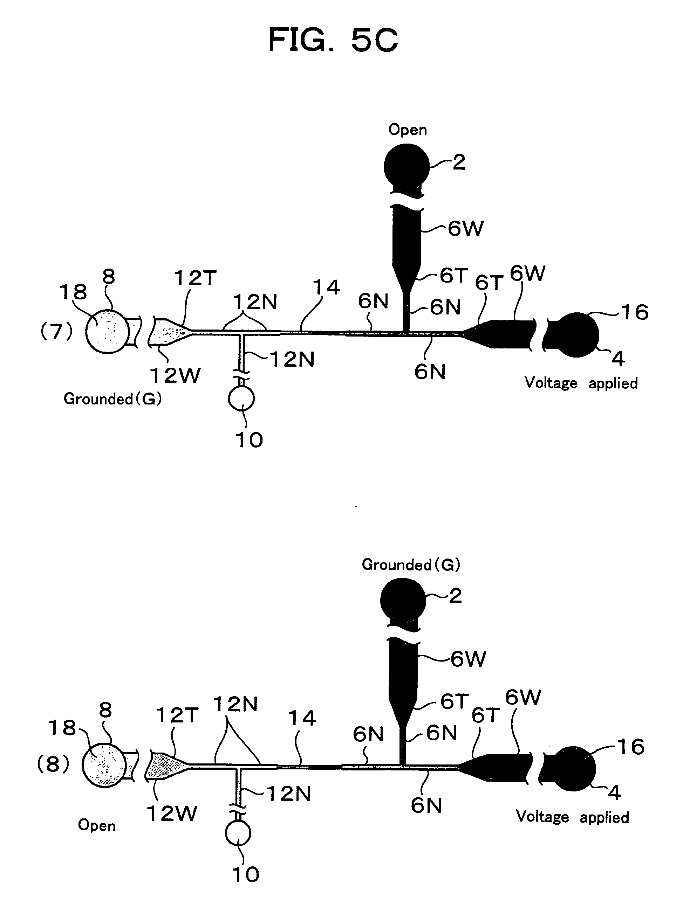

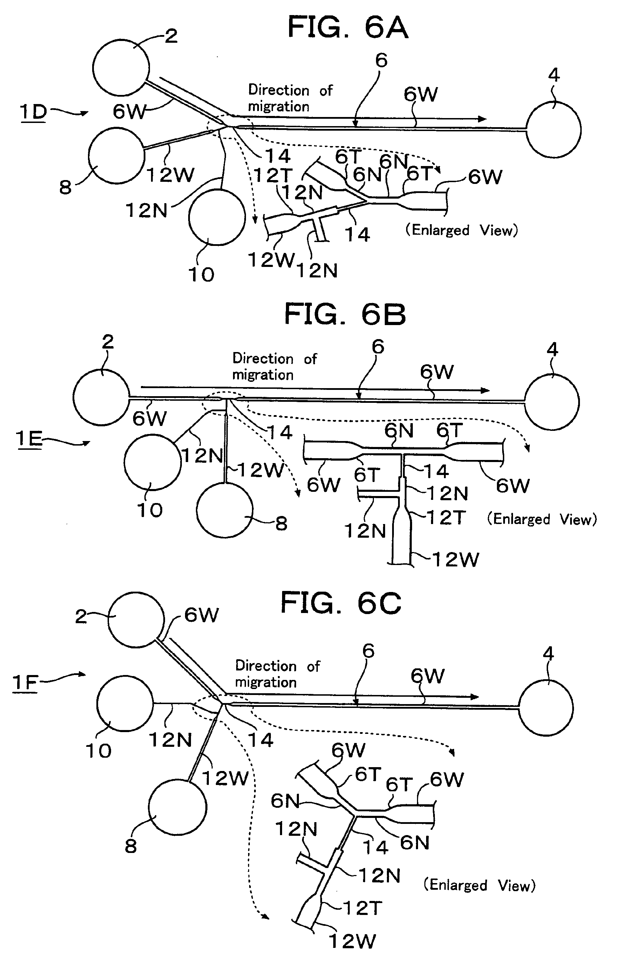

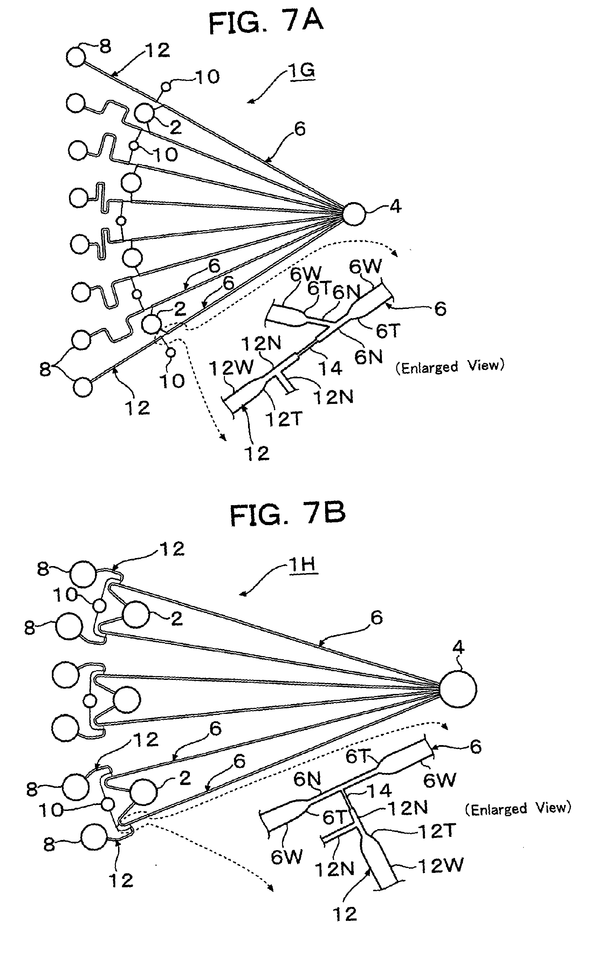

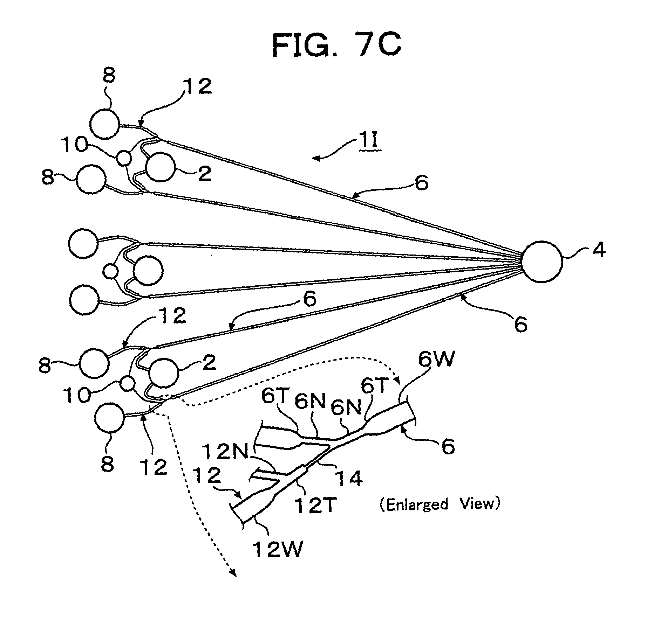

On the following pages, preferred embodiments of the micro-channel chip for electrophoresis of the present invention are described in detail with reference to the accompanying drawings. FIG. 1 is a transparent plan view showing an embodiment of the micro-channel chip for electrophoresis of the present invention, and FIG. 2 shows an outline section taken through FIG. 1 along line II-II. FIG. 3 is a transparent plan view showing another embodiment of the micro-channel chip for electrophoresis of the present invention, and FIG. 4 is a transparent plan view showing still another embodiment of the micro-channel chip for electrophoresis of the present invention. FIG. 5 presents flow sheets illustrating the steps in the method for electrophoresis using the micro-channel chip for electrophoresis according to the embodiment shown in FIG. 4. FIG. 6A is a transparent plan view showing a further embodiment of the micro-channel chip for electrophoresis of the present invention. FIG. 6B is a transparent plan view showing a still further embodiment of the micro-channel chip for electrophoresis of the present invention. FIG. 6C is a transparent plan view showing yet another embodiment of the micro-channel chip for electrophoresis of the present invention. FIG. 7A is a transparent plan view showing a further embodiment of the micro-channel chip for electrophoresis of the present invention. FIG. 7B is a transparent plan view showing a still further embodiment of the micro-channel chip for electrophoresis of the present invention. FIG. 7C is a transparent plan view showing yet another embodiment of the micro-channel chip for electrophoresis of the present invention.

Reference is now made to FIG. 1. The micro-channel chip for electrophoresis generally indicated by 1A has an electrophoretic channel 6 with ports 2 and 4 at opposite ends, a sample-feeding channel 12 with ports 8 and 10 at opposite ends, and a narrower channel 14. As will be explained below in detail, either one of the two ports 8 and 10 that are connected to the sample-feeding channel 12 serves as an air-withdrawing port. The electrophoretic channel 6 and the sample-feeding channel 12 are each formed in a generally L shape. The narrower channel 14 brings the bent portion of the electrophoretic channel 6 into communication with the bent portion of the sample-feeding channel 12.

Reference is now made to FIG. 2. The micro-channel chip for electrophoresis generally indicated by 1A in FIG. 1 basically has a two-layer structure consisting of the first substrate 16 glued to the second substrate 18. What is important about the micro-channel chip for electrophoresis of the present invention is that at least one of the first substrate 16 and the second substrate 18 should be formed of a gas-permeable material. As will be explained below in detail, when a sample solution is injected into the sample-feeding channel 12, the narrower channel 14 functions as if it were a valve, so the sample solution is not capable of getting into the narrower channel 14 and air will remain in it. To remove this remaining air, at least one of the two substrates has to be formed of a gas-permeable material. In the illustrated embodiment, the electrophoretic channel 6, the sample-feeding channel 12, and the narrower channel 14 are all provided in the mating surface of the first substrate 16, but this is not the sole case of the present invention and they may be provided in the mating surface of the second substrate 18.

FIG. 3 is a transparent plan view showing a micro-channel chip for electrophoresis according to another embodiment of the present invention, which is generally indicated by 1B. In this micro-channel chip for electrophoresis 1B, the electrophoretic channel 6 and the sample-feeding channel 12 are each formed in a generally T shape. Forming each of the electrophoretic channel 6 and the sample-feeding channel 12 in a generally T shape and causing the projections of the two T's to communicate with each other via the narrower channel 14 offers the advantage that the flows of solutions in the narrower channel 14 will become less disturbed.

FIG. 4A is a transparent plan view showing a micro-channel chip for electrophoresis according to still another embodiment of the present invention, which is generally indicated by 1C. FIG. 4B is a partially enlarged transparent plan view of the micro-channel chip for electrophoresis 1C shown in FIG. 4A. In this micro-channel chip for electrophoresis 1C, the electrophoretic channel 6 and the sample-feeding channel 12 are each formed in a generally T shape but unlike in the micro-channel chip for electrophoresis 1B shown in FIG. 3, each channel is so formed that it varies in width and consists of the wider portions (6W or 12W) and the narrower portions (6N or 12N). In addition, the transitional portions 6T and 12T, or those which make a transition from the wider portion to the narrow portion, are each formed as a taper. The narrower channel 14 serves to establish communication between the projection of the narrower portion of the electrophoretic channel 6 and the projection of the narrower portion of the sample-feeding channel 12. However, the narrow channel 14 has an even smaller width than the narrower portion (6N) of the electrophoretic channel 6, as well the narrower portion (12N) of the sample-feeding channel 12. This offers the advantage that the flows of solutions in the narrower channel 14 become even less disturbed. Since the port 10 is an air-withdrawing port, the sample-feeding channel to be connected to this port 10 may be composed of the fine channel 12N. This contributes to saving the amount of the sample solution that need be used.

The cross-sectional area or capacity of the narrower channel 14 must be such that when the electrophoretic electrolyte polymer and the sample solution are brought into contact with each other, neither of them is capable of free movement (as exemplified by one liquid coming under the other liquid). In one example, the height of the narrower channel 14 is approximately 0.001 mm to 0.05 mm, the width is approximately 0.005 mm to 0.1 mm, and the length is approximately 0.05 mm to 1 mm. Preferably, the respective sizes are approximately 0.005 mm, 0.01 mm, and 0.5 mm.

The narrower portions 6N of the electrophoretic channel and the narrower portions 12N of the sample-feeding channel must have a height and a width that are greater than the corresponding dimensions of the narrower channel 14. On the other hand, to ensure that the sample will be cut off "sharply" in response to a change in the migration voltage, it is preferable that the narrower portions 6N and 12N are not unduly wide. In one example, the narrower portions 6N of the electrophoretic channel 6 and the narrower portions 12N of the sample-feeding channel 12 have a height and a width that are each approximately 0.01 mm to 0.1 mm. Preferably, they each have a height of approximately 0.05 mm to 0.08 mm and a width of approximately 0.02 mm to 0.03 mm. These narrower portions 6N and 12N may have the same height and width; alternatively, they may have different heights and widths.

The electrophoretic channel 6 and its wider portions 6W as well as the sample-feeding channel 12 and its wider portions 12W each have a height in the range from 0.01 mm to 0.1 mm, preferably from 0.05 mm to 0.08 mm, and a width in the range from 0.05 mm to 1.0 mm, preferably from 0.1 mm to 0.4 mm. The portions 6W and 12W must be wider than the portions 6N and 12N. If this requirement is met, the sample will have a sufficiently small distribution with respect to the axis of migration that a higher resolution is achieved. The electrophoretic channel 6 and its wider portions 6W as well as the sample-feeding channel 12 and its wider portions 12W may have the same height and width; alternatively, they may have different heights and widths.

The transitional portion 6T (or 12T), or the one which makes a transition from the wider portion 6W (or 12W) of the electrophoretic channel 6 (or the sample-feeding channel 12) to the narrow portion 6N (or 12N), is preferably formed as a taper. In one example, the angle of taper is approximately 10 degrees to 120 degrees with respect to the central axis. Preferably, the angle of taper is approximately 30 degrees to 60 degrees with respect to the central axis. The taper need not be linear and a curved taper is also applicable.

The only requirement that need be met by the electrophoretic channel 6 and its wider portions 6W is that they have the necessary and sufficient length for performing electrophoresis. Although not shown, the sample that has been migrated to a site closer to the port 4 is detected by a known conventional means (say, a fluorescence detector).

In the micro-channel chip for electrophoresis of the present invention, at least one of the first substrate 16 and the second substrate 18 must be formed of a gas-permeable material. The gas-permeable material that is useful in the fabrication of the micro-channel chip for electrophoresis of the present invention may be exemplified by silicone rubber (say, polydimethylsiloxane (PDMS)). Other gas-permeable materials can also be used. If polydimethylsiloxane is used as the material for one of the two substrates, the material for the other substrate is preferably polydimethylsiloxane or glass. Two substrates each made of polydimethylsiloxane, or one being made of polydimethylsiloxane and the other made of glass, can be strongly adhered to each other without using an adhesive. This phenomenon is generally called "permanent bonding." Permanent bonding refers to such a property that two substrates containing Si as a substrate's component can be adhered to each other without using an adhesive but by just performing a certain kind of surface modification; this property contributes to exhibiting an effective seal on fine-width structures such as channels in micro-channel chips. In the permanent bonding of PDMS substrates, their mating surfaces are subjected to an appropriate treatment of surface modification and then the two substrates are superposed, with the mating surface of one substrate being placed in intimate contact with the mating surface of the other substrate, and the assembly is left to stand for a certain period of time, whereupon the two substrates can be easily adhered together.

The method of forming micro-channels in the mating surface of the first substrate 16 or the second substrate 18 is well known in itself to skilled artisans. For example, they can be formed by casting silicone rubber or the like into a mold fabricated by a photolithographic technique involving exposure of a photoresist to light through a mask. The thicknesses of the first substrate 16 and the second substrate 18 are not essential requirements of the present invention in themselves. Generally speaking, the thickness of the substrate made of a gas-permeable material is preferably within the range from 0.1 mm to 5 mm. If the thickness of the gas-permeable substrate is less than 0.1 mm, air can be easily removed from within the narrower channel 14 via that substrate but, on the other hand, the substrate has too low a mechanical strength to perform its function. If the thickness of the gas-permeable substrate is in excess of 5 mm, its mechanical strength is more than satisfactory but, on the other hand, high pressure is required to remove air from within the narrower channel 14, which is by no means preferable.

Next, we explain the method of using the micro-channel chip for electrophoresis of the present invention by referring to FIGS. 5A to 5C. The chip to be used is the micro-channel chip for electrophoresis 1C depicted in FIG. 4A, but other types of chip can equally be used. For the sake of explanation, the sizes of the illustrated channels and ports are exaggerated and differ from their actual sizes. Reference is now made to FIG. 5A. First, in step (1), an electrolyte polymer solution 16 for electrophoretic separation is aliquoted into the port 4 which is located at one end of the electrophoretic channel. Then, in step (2), pressure is applied through the port 4 so that the electrolyte polymer solution 16 is injected to fill the wider portions 6W and the narrower portions 6N of the electrophoretic channel completely. Since the narrower channel 14 communicating with the farthest end of the narrower portion 6N has a smaller cross-sectional area than that narrower portion 6N, it functions like a passive valve, preventing the electrolyte polymer solution 16 from getting into the narrower channel 14. Then, in step (3), the electrolyte polymer solution 16 is aliquoted into the port 2 which is located at the other end of the electrophoretic channel.

Reference is now made to FIG. 5B. First, in step (4), a sample solution 18 is aliquoted into the port 8 which is located at one end of the sample-feeding channel. Then, in step (5), pressure is applied through the port 8 so that the sample solution 18 is injected to fill the wider portion 12W and the narrower portions 12N of the sample-feeding channel completely, whereupon as shown in the enlarged view, air is left within the narrower channel 14. Then, in step (6), pressure is applied through all ports 2, 4, 8 and 10 simultaneously so as to remove the remaining air from within the narrower channel 14 via the gas-permeable substrate, whereupon the sample solution 18 and the electrolyte polymer solution 16 are brought into contact with each other within the narrower channel 14 to form an interface.

Reference is now made to FIG. 5C. First, in step (7), an electric voltage (say, a voltage in the range from 100 to 200 V) is applied to the port 4, with the port 8 being grounded (G). In the meantime, the port 2 is rendered open. As a result, the sample solution 18 in the narrower channel 14 starts to migrate slowly through the electrolyte polymer solution toward the port 4. Then, in step (8), at the point in time when the sample solution 18 has migrated past the diverging point of the narrower portion 6N of the electrophoretic channel to reach a point closer to the tapered portion 6T toward the port 4, an electric voltage (say, a voltage in the range from 400 to 800 V) is applied to the port 4, with the port 8 being rendered open and the port 2 grounded (G) rather than rendered open. This initiates electrophoresis for separating the sample into fragments.

FIG. 6A is an outline transparent plan view showing a micro-channel chip for electrophoresis according to a further embodiment of the present invention, which is generally indicated by 1D, as well as a partially enlarged view of the same. In this embodiment, the electrophoretic channel 6 extending from the port 2 to the port 4 is bent to form an obtuse angle at the junction with the narrower channel 14. In addition, the narrower channel 14 is connected to the electrophoretic channel 6 in such a way that it does not cross the narrower portions 6N at right angles. If the narrower channel 14 crosses the narrower portions 6N of the electrophoretic channel 6 at right angles, the concentration distribution of the sample is affected by a channel bend. Ideally, all channels and channel portions are arranged in a straight line but actually this is impossible to realize. As a compromise, it is preferred to arrange them in a form that is as linear as possible. To this end, the micro-channel chip for electrophoresis 1D shown in FIG. 6A has been fabricated and it is capable of reducing the deviation in the distribution of sample concentration in the direction of channel width.

FIG. 6B is an outline transparent plan view showing a micro-channel chip for electrophoresis according to a still further embodiment of the present invention, which is generally indicated by 1E, as well as a partially enlarged view of the same. In this embodiment, the electrophoretic channel 6 extending from the port 2 to the port 4 is formed in a straight line and the narrower channel 14 crosses the narrower portion 6N of the electrophoretic channel 6 at right angles. In this embodiment, a deviation of the kind described above occurs in the concentration distribution of the sample but, on the other hand, there is the advantage that during electrophoresis to give separate fragments, an electric voltage is applied uniformly enough to stabilize the sample behavior.

FIG. 6C is an outline transparent plan view showing a micro-channel chip for electrophoresis according to yet another embodiment of the present invention, which is generally indicated by 1F, as well as a partially enlarged view of the same. The embodiment depicted in FIG. 6C is a compromise that secures the advantages of the two embodiments depicted in FIGS. 6A and 6B.

The distance from the port 2 to the junction between the electrophoretic channel 6 and the narrower channel 14 is preferably of a comparatively long dimension. In the micro-channel chip for electrophoresis, electrodes are inserted between the port 2 and the port 4 but their positional precision is not generally very good. As a consequence, if electrodes are inserted in a position offset from the central axis of the electrophoretic channel, the voltage distribution in the direction of channel width will be affected. However, since the cross-sectional area and capacity of the port 2 are much greater than those of the channels, any effect that might result from the deviation of voltage distribution in the electrophoretic channel 6 can be mitigated over the distance up to the junction with the narrower channel 14 if this distance is of a reasonable size.

FIG. 7A is an outline transparent plan view showing a micro-channel chip for electrophoresis according to a further embodiment of the present invention, which is generally indicated by 1G, as well as a partially enlarged view of the same. In this embodiment, eight electrophoretic channels 6 share a single port 4 whereas one port 2 is shared by every two electrophoretic channels 6; in addition, every two electrophoretic channels 6 except the outermost ones share one port 10 which serves to withdraw air. The micro-channel chip for electrophoresis 1G according to this embodiment is suitable for analyzing eight samples at a time in an efficient manner. Needless to say, the number of electrophoretic channels 6 is not limited to the illustrated case where they are eight in number.

FIG. 7B is an outline transparent plan view showing a micro-channel chip for electrophoresis according to a still further embodiment of the present invention, which is generally indicated by 1H, as well as a partially enlarged view of the same. In this embodiment, two electrophoretic channels 6 make a pair and three such pairs are connected to one port 4. Needless to say, four or more pairs of electrophoretic channels 6 are applicable. The two electrophoretic channels 6 in pair share the port 2 and the air-withdrawing port 10.

FIG. 7C is an outline transparent plan view showing a micro-channel chip for electrophoresis according to yet another embodiment of the present invention, which is generally indicated by 1I, as well as a partially enlarged view of the same. The micro-channel chip for electrophoresis 1I is basically the same as the micro-channel chip for electrophoresis 1H according to the embodiment shown in FIG. 7B and the only difference is about the manner in which the narrower channel 14 is connected to the narrower portions 6N of each electrophoretic channel 6; this is generally the same as the manner of connection depicted in the partially enlarged view of FIG. 6A.

### EXAMPLE 1

A micro-channel chip for electrophoresis with the shape shown in FIGS. 4A and 4B was fabricated and subjected to an electrophoresis test. Both the first substrate 16 and the second substrate 18 were made of PDMS. Channels and other fine-width structures were formed on the mating surface of the first substrate 16 by a common photolithographic technique. The ports 2, 4, 8 and 10 were opened in the first substrate 16. The first substrate 16 was 4 mm thick and the second substrate 18 was 2 mm thick. The ports 2, 4, 8 and 10 each had an inside diameter of 3 mm. The wider portions 6W of the electrophoretic channel 6 were each 0.07 mm high and 0.1 mm wide, whereas the narrower portions 6N were each 0.07 mm high and 0.02 mm wide; the wider portions 12W of the sample-feeding channel 12 were each 0.07 mm high and 0.1 mm wide, whereas the narrower portions 12N were each 0.07 mm high and 0.02 mm wide; and the narrower channel 14 was 0.005 mm high and 0.01 mm wide.

A polyacrylamide solution was aliquoted into the port 4 as an electrolyte polymer solution for electrophoresis. The electrolyte polymer solution consisted of 5% polyacrylamide (m.w. of 6-10 x 10⁵) in 1x TBE buffer. With the top of the opening in the port 4 being covered, a pressure of 3 kPa was applied to fill the port 2 with the electrolyte polymer solution until it was level with the upper edge of the port 2. The same electrolyte polymer solution was aliquoted into the port 2. Subsequently, a sample solution having DNA fragments with known base sequences that had been labeled with fluorochromes FAM and TAMRA was aliquoted into the port 8. The sample solution was prepared by dissolving desalted DNA fragments in distilled water. With the top of the opening in the port 8 being covered, a pressure of 3 kPa was applied to fill the port 10 with the sample solution until it was level with the upper edge of the port 10. Thereafter, with the tops of the openings in all ports being covered, a pressure of 4 kPa was applied to remove the residual air from within the narrower channel 14 via the gas-permeable PDMS substrate, whereupon the electrolyte solution and the sample solution were brought into contact with each other in the narrower channel 14 to form an interface.

With the port 2 being rendered open and the port 8 grounded, an electric voltage of 100 V was applied to the port 4 so that the sample solution was migrated toward the port 4 via the narrower channel 14 until it reached the vicinity of the tapered portion 6T of the electrophoretic channel 6, and a sample was then collected. Thereafter, with the port 8 being rendered open and the port 2 grounded, an electric voltage of 400 V was applied to the port 4 for electrophoresing the collected sample. For fluorescence detection, a fluorescent microscope was employed. Processing of the detected fluorescent signal showed a match with the known base sequences. From these results, it was verified that the micro-channel chip of the present invention was more than satisfactory for use as an electrophoretic chip.

### INDUSTRIAL APPLICABILITY

While the preferred embodiments of the micro-channel chip for electrophoresis of the present invention have been specifically described above, it should be noted that the present invention is by no means limited to the embodiments disclosed herein but allows for various modifications. For example, the port 4 provided at a point that is generally the center of the substrate may be connected to a plurality of radially arranged electrophoretic channels, which are combined with the required number of sample-feeding channels. This embodiment is also included within the scope of the micro-channel chip for electrophoresis of the present invention.
The micro-channel chip for electrophoresis of the present invention can be operated on a single power source to perform electrophoresis and this feature contributes to a marked improvement in its practical utility and economy. As a result, the micro-channel chip for electrophoresis of the present invention finds effective and advantageous use in various fields including medicine, veterinary medicine, dentistry, pharmacy, life science, foods, agriculture, fishery, and police forensics. In particular, the micro-channel chip for electrophoresis of the present invention is optimum for use in the fluorescent antibody technique and in-situ hybridization and can be used inexpensively in a broad range of applications including testing for immunological diseases, cell culture, virus fixation, pathological test, cytological diagnosis, biopsy tissue diagnosis, blood test, bacteriologic examination, protein analysis, DNA analysis, and RNA analysis.

## Claims

1. A micro-channel chip for electrophoresis comprising a first substrate formed of a gas-permeable material and a second substrate formed of a gas-permeable or a gas-impermeable material, the first and the second substrate being glued together, the mating surface of either one of the first and second substrates having a sample-feeding channel having a port at both ends and an electrophoretic channel also having a port at both ends, the sample-feeding channel and the electrophoretic channel being allowed to communicate with each other via a narrower channel having a smaller cross-sectional area than those two channels.

2. The micro-channel chip for electrophoresis according to claim 1, **characterized in that** a projection is formed halfway down each of the sample-feeding channel and the electrophoretic channel and that the two projections are allowed to communicate with each other via the narrower channel.

3. The micro-channel chip for electrophoresis according to claim 1, **characterized in that** each of the sample-feeding channel and the electrophoretic channel comprises a channel of ordinary width having a channel portion of smaller width halfway down that channel and that the two channel portions of smaller width are allowed to communicate with each other via the narrower channel.

4. The micro-channel chip for electrophoresis according to claim 3, **characterized in that** the area between the channel of ordinary width and the channel portion of smaller width is formed as a taper.

5. The micro-channel chip for electrophoresis according to claim 3, **characterized in that** a channel of ordinary width is connected to the port at one end of the sample-feeding channel whereas the channel portion of smaller width is connected to the port at the other end of the sample-feeding channel.

6. The micro-channel chip for electrophoresis according to claim 1, **characterized by** having a plurality of electrophoretic channels, all of which are connected at an end to a single port and every two of which are connected at the other end to one common port, one sample-feeding channel being connected to each electrophoretic channel via the narrower channel, and one common air-withdrawing port being connected to every two sample-feeding channels.

7. The micro-channel chip for electrophoresis according to claim 1, **characterized in that** the air-permeable material is silicone rubber.

8. The micro-channel chip for electrophoresis according to claim 7, **characterized in that** the silicone rubber is polydimethylsiloxane (PDMS).

9. A method for electrophoresis using a micro-channel chip for electrophoresis comprising a first substrate formed of a gas-permeable material and a second substrate formed of a gas-permeable or a gas-impermeable material, the first and the second substrate being glued together, the mating surface of either one of the first and second substrates having a sample-feeding channel having a port at both ends and an electrophoretic channel also having a port at both ends, the sample-feeding channel and the electrophoretic channel being allowed to communicate with each other via a narrower channel having a smaller cross-sectional area than those two channels, comprising:
(1) the step of aliquoting an electrolyte polymer solution for electrophoretic separation into the first port of the electrophoretic channel;
(2) the step of applying pressure through the first port so that the electrophoretic channel is entirely filled with the electrolyte polymer solution;
(3) the step of aliquoting the electrolyte polymer solution into the second port of the electrophoretic channel;
(4) the step of aliquoting a sample solution into the first port of the sample-feeding channel;
(5) the step of applying pressure through the first port so that the sample-feeding channel is entirely filled with the sample solution;
(6) the step of applying pressure simultaneously not only through the first and second ports of the electrophoretic channel but also through the first and second ports of the sample-feeding channel, whereby the air left within the narrower channel is removed via the gas-permeable substrate and the sample solution and the electrolyte sample solution are brought into contact with each other within the narrower channel to form an interface;
(7) the step of applying an electric voltage to the first port of the electrophoretic channel, with the second port of the electrophoretic channel being rendered open and the first port of the sample-feeding channel grounded (G), whereupon the sample solution in the narrower channel is moved to the electrophoretic channel; and
(8) the step of applying, at the point in time when the sample solution has moved to the electrophoretic channel, an electric voltage to the first port of the electrophoretic channel, with the first port of the sample-feeding channel being rendered open and the second port of the electrophoretic channel grounded (G), so that the sample is electrophoresed.

10. The method for electrophoresis according to claim 9, **characterized in that** the air-permeable material is silicone rubber.

11. The method for electrophoresis according to claim 10, **characterized in that** the silicone rubber is polydimethylsiloxane (PDMS).
